# EUROPEAN PATENT APPLICATION

(11) **EP 3 708 955 A1**
(43) Date of publication of application: **16.09.2020**
(21) Application number: 19162870.0
(22) Date of filing: 14.03.2019
(51) Int. Cl.: G01C 21/20

(54) **IMPROVING MULTI-LEVEL ALTITUDE MAP**

(71) Applicant: HERE Global B.V., 5611 ZT Eindhoven (NL)
(72) Inventor: IVANOV, Pavel, 33100 Tampere (FI); WIROLA, Lauri Aarne Johannes, 33100 Tampere (FI); NURMINEN, Henri Jaakko Julius, 33100 Tampere (FI)
(74) Representative: Cohausz & Florack

(57) **Abstract**

Disclosed is inter alia a method, performed by at least one apparatus, the method comprising: obtaining (41) fingerprint data at least comprising position information collected by a mobile device (2) in a region (50), said position information comprising altitude information; obtaining (42) geographical map data at least partially representing the region (50) and comprising geometric information (64, 66) about one or more structures (54, 56) in the region (50); and performing (43), based on said fingerprint data, a multi-layer estimation for one or more tiles (62) of an altitude map (60a, 60b, 60c) at least partially representing the region (50), wherein said multi-layer estimation further takes into account the geometric information (64, 66) about one or more structures (54, 56) in the region (50).

## Description

### FIELD OF THE INVENTION

The invention relates to the field of positioning. Particularly, the invention describes ways of generating and/or updating altitude maps, which can in particular be used for positioning purposes and in particular for indoor positioning.

### BACKGROUND OF THE INVENTION

Indoor positioning requires novel systems and solutions that are specifically developed and deployed for this purpose. The traditional positioning technologies, which are mainly used outdoors, i.e. satellite and cellular positioning technologies, cannot deliver such performance indoors that would enable seamless and equal navigation experience in both environments. The required positioning accuracy (2-3 m), coverage (∼100%) and floor detection are challenging to achieve with satisfactory performance levels with the systems and signals that were not designed and specified for the indoor use cases in the first place. Satellite-based radio navigation signals simply do not penetrate through the walls and roofs for the adequate signal reception and the cellular signals have too narrow bandwidth for accurate ranging by default.

Several indoor-dedicated solutions have already been developed and commercially deployed during the past years e.g. solutions based on technologies like pseudolites (GPS-like short-range beacons), ultra-sound positioning, Bluetooth or Bluetooth LE signals and Wi-Fi fingerprinting. What is typical to these solutions is that they require either deployment of totally new infrastructure (such as beacons or tags) or manual exhaustive radiosurveying of the buildings including all the floors, spaces and rooms. This is rather expensive and will take a considerable amount of time to build the coverage to the commercially expected level, which can in some cases narrow the potential market segment to only a very thin customer base e.g. for health care or dedicated enterprise solutions. Also, the diversity of these technologies makes it difficult to build a globally scalable indoor positioning solution, and the integration and testing will become complex if a large number of technologies needs to be supported in the consumer devices, such as smartphones.

For an indoor positioning solution to be commercially successful it needs to be globally scalable, have low maintenance and deployment costs, and offer acceptable end-user experience. This can best be achieved, if the solution is based on an existing infrastructure in the buildings and on existing capabilities in the consumer devices. Accordingly, the indoor positioning needs to be based on technologies like Wi-Fi- and/or Bluetooth (BT)-technologies that are already supported in almost every smartphone, tablet, laptop and even in the majority of the feature phones. It is, thus, required to find a solution that uses such radio signals in such a way that makes it possible to achieve 2-3 m horizontal positioning accuracy, close to 100% floor detection with the ability to quickly build the global coverage for this approach.

One approach for radio-based indoor positioning models e.g. the Wi-Fi-radio environment (or any similar radio e.g. Bluetooth) from observed Received Signal Strength (RSS)-measurements as 2-dimensional radiomaps and is hereby able to capture the dynamics of the indoor radio propagation environment in a compressable and highly accurate way. This makes it possible to achieve unprecedented horizontal positioning accuracy with the radio signals only within the coverage of the created radiomaps and also gives highly reliable floor detection.

Huge volumes of indoor radio signal measurement data (so called fingerprints) can be harvested via crowd-sourcing if the consumer devices are equipped with the necessary functionality to enable the radio signal data collection as a background process, naturally with the end-user consent. It could also be possible to use volunteers to survey the sites (buildings) in exchange of reward or recognition and get the coverage climbing up globally in the places and venues important for the key customers. However, the technical challenges related to the harvesting, processing, redundancy, ambiguity and storing the crowd-sourced data need to be understood and solved first, before the radiomap creation can be based on the fully crowd-sourced data.

An essential part in crowd-sourcing of such radio fingerprints is the absolute or relative altitude references of the mobile device and their accuracy. Altitude information is crucial especially indoors where received radio signal strengths in one horizontal location can vary drastically as a function of the altitude level. This variation is due to building structures.

There are different approaches for estimating an altitude, such as using global navigation satellite systems (GNSS), using a barometer, or using an altitude map. While GNSS-based altitude estimates work relatively well outdoors in good signal conditions, the estimates are often not available indoors, and when they are, they have an accuracy of about 50 meters, which is not acceptable for indoor floor-level localization accuracy. A barometer may provide high-resolution pressure measurements which can be used to estimate altitude changes. However, this also requires knowing a reference altitude very accurately. An altitude map usually only works well in locations where the altitude is unambiguous, i.e. where there is just one ground altitude and no multilevel structures. While there is the possibility of a multilevel altitude map comprising spatially resolved information about the layer structure (single- or multilayer structure) and the altitude of the individual layers in the region represented by the altitude map, the challenges connected with generating and maintaining such a multilevel altitude map typically impair the quality of the altitude map so that a precise positioning especially in multilevel areas is still difficult.

More particularly, the approach of using an altitude map and particularly the determination of single and multi-layer areas may face the following challenges:
Firstly, errors in horizontal positioning might cause an estimated multi-layer area to get bigger than it actually is, i.e. the estimated multi-layer area "leaks" outside of the true area. This might cause single-layer areas such as streets to be labeled as multi-layer. Also, this effect may result in data from separate but nearby structures to get mixed. Generally, such effects could be mitigated by looking at horizontal areas with the same layer structure. However, determining which horizontal area has a uniform layer structure is challenging. On the one hand, if a relatively large area is analyzed with the assumption of having a uniform layer structure, too many layers may be detected because there is the risk of inadvertently considering data from multiple structures. On the other hand, if we use a conservative approach, i.e. unnecessarily small areas are used as a basis for determining information about a potential multi-layer structure, valuable information can be lost, since only data from a rather small area is input into the multi-layer estimation algorithm, while the algorithm may rely on more data from a wider area. Furthermore, dividing structure data horizontally into several parts may result in different detected layer altitudes for different parts of the structure. This will harm the end user, because the altitude estimate will be jumpy even when the user stays in one floor.
Secondly, due to erroneous altitude estimations, the outcome of a multi-layer estimation algorithm might assume that there are more layers than there actually exist even when data from just a single structure is used.

### SOME EXAMPLE EMBODIEMNTS OF THE INVENTION

Thus, in view of the above it is inter alia an object of the invention to provide methods and apparatuses for providing altitude maps with an improved quality and precision, in particular with respect to the determination of multi-layer areas and their layer structure.

According to an exemplary aspect of the invention, a method is disclosed, performed by at least one apparatus, the method comprising:
- obtaining fingerprint data at least comprising position information collected by a mobile device in a region, said position information comprising altitude information;
- obtaining geographical map data at least partially representing the region and comprising geometric information about one or more structures in the region;
- performing, based on said fingerprint data, a multi-layer estimation for one or more tiles of an altitude map at least partially representing the region, wherein said multi-layer estimation further takes into account the geometric information about one or more structures in the region.

The method may for instance be performed and/or controlled by an apparatus, for instance by a mobile device and/or a server, e.g. an apparatus according to the exemplary aspects, as described in more detail below.

According to a further exemplary aspect of the invention, an apparatus is disclosed comprising means for performing a method according to the exemplary aspect. The means of the apparatus may be implemented in hardware and/or software. They may comprise for instance at least one processor for executing computer program code for realizing the required functions, at least one memory storing the program code, or both. Alternatively, they could comprise for instance circuitry that is designed to realize the required functions, for instance implemented in a chipset or a chip, like an integrated circuit. In general, the means may comprise for instance one or more processing means such as a processor and a memory. Optionally, the apparatus may comprise various other components, like a communication interface, a network interface, a radio interface, a data interface, a user interface etc. For instance, the apparatus may comprise at least one processor and at least one memory including computer program code; the at least one memory and the computer program code configured to, with the at least one processor, cause the apparatus to at least perform a method according to the exemplary aspect of the invention.

The above-disclosed apparatuses according to any aspect of the invention may be a module or a component for a device, for example a chip. Alternatively, the disclosed apparatus according to any aspect of the invention may be a device, for instance a mobile device or a server. The disclosed apparatus according to any aspect of the invention may comprise only the disclosed components, for instance means, processor, memory, or may further comprise one or more additional components.

According to a further exemplary aspect of the invention, a computer program code is disclosed, the computer program code, when executed by a processor, causing an apparatus to perform the method according to the exemplary aspect. The computer program may be stored on a computer-readable storage medium, in particular a tangible and/or non-transitory medium. The computer readable storage medium could for example be a disk or a memory or the like. The computer program could be stored in the computer readable storage medium (e.g. according to the exemplary aspect of the invention described below) in the form of instructions encoding the computer-readable storage medium. The computer readable storage medium may be intended for taking part in the operation of a device, like an internal or external memory, for instance a Read-Only Memory (ROM) or hard disk of a computer, or be intended for distribution of the program, like an optical disc.

According to a further exemplary aspect of the invention, a non-transitory computer readable storage medium is disclosed, in which computer program code is stored, the computer program code when executed by a processor causing at least one apparatus to perform the method according to the exemplary aspect. The storage medium may be a tangible storage medium, for example a tangible computer-readable storage medium. The storage medium may be a storage medium of a mobile device or server, for example an apparatus according to the exemplary aspects of the invention.

In the following, exemplary features and exemplary embodiments of all aspects of the present invention will be described in further detail.

The fingerprint data may for instance be collected by a plurality of mobile devices surveying the region. For instance, the position information is indicative of one or more positions that the mobile device has visited. In particular, the fingerprint data or the position information may represent the location history of the mobile device (e.g. via location history samples). For instance, the fingerprint data may be collected by means of a crowd-sourcing process. In one example, the fingerprint data may also comprise radio measurements. The fingerprint data can in this case be considered radio fingerprint data. The radio measurements are measurements of the radio environment of the region. For instance, the radio measurements may comprise information representative of a received signal strength (e.g. RSS), a timing measurement (e.g. round trip time) and/or an angle of arrival of radio signals. The radio signals may for instance be cellular signals or non-cellular signals, for instance WiFi signals or Bluetooth signals, just to name some examples. While radio measurements from the latter signals may generally also aid in the determination of a position, the necessary information for utilizing the radio measurements for positioning is typically not yet present in an early surveying phase of a region. The fingerprint data may be used for generating and/or maintaining a radio map and/or an altitude map.

In case the (radio) fingerprint data comprises radio measurements, these radio measurements may be associated with the position information. In his case, the position information may indicate the position (or an estimate thereof), where a respective radio measurement was taken. Apart from the altitude information, the position information may also comprise horizontal position information. The altitude information may be relative and/or absolute altitude information. For instance, the altitude information may comprise information representative of absolute reference positions together with relative altitude information.

It is noted that it can be assumed that the mobile device (i.e. the device collecting the fingerprint data and/or taking the radio measurements) can typically not be at any arbitrary altitude or vertical position but that it is usually at a realistic or true altitude, which is at least close to an altitude value of a layer of a respective structure.

For instance, the altitude information may comprise information representative of at least an altitude value (e.g. in meters or feet) above a reference altitude, such as the ground, the mean sea level or the WGS 84 reference ellipsoid. For instance, such altitude information may be satellite based altitude information which has been determined based on a satellite system. A satellite system is for example a Global Navigation Satellite System (GNSS) such as "Global Positioning System" (GPS), "Galileo", "Global Navigation Satellite System" (i.e. "Globalnaja Nawigazionnaja Sputnikowaja Sistema", GLONASS), "BeiDou Navigation Satellite System" (BDS), or "Quasi-Zenith Satellite System" (QZSS), to name some examples.

The altitude information may additionally or alternatively be sensor-based. For instance, the altitude information may be based on motion information, e.g. based on signals of inertial sensors, such as a gyroscope and/or an accelerometer. The altitude information may also be based on one or more pressure measurements (e.g. of a barometric sensor), which are indicative of an ambient pressure and/or an ambient pressure change.

A structure may in particular be a building. For instance a structure may be a private or public building. For instance a structure may be a house, a factory, a hotel, a mall, a hospital, an apartment building, an office building or the like. A structure may in particular be a building which is accessible by people and which has one or more floors.

The altitude map comprises tiles. Each tile may represent a respective part of the (geographical) region the altitude map is representing. The tiles may for instance substantially cover the region represented by the altitude map. A tile may be understood to be a small horizontal area of the altitude map. A tile may generally have any polygonal shape. For instance, a tile may be rectangular area of the altitude map. However, a tile may also have a triangular shape, for instance. Also, an altitude map may comprise different shapes of tiles. Thus, a tile may be understood as defining a sub-area in the altitude map. For instance, the tile may be defined by a (regular or irregular) grid or lattice of the altitude map.

The altitude map may, however, also comprise further information. For instance, the altitude map may also comprise radio signal data, similarly to a radio map, for instance. Thus an altitude may not be limited to comprising layer or altitude information.

Further, the tiles of the altitude map may be dynamically adapted. For instance, an adaption of the size, shape and/or number of tiles may be required during a multi-layer estimation in view of the geometric information, as will be described in more detail below.

A multi-layer estimation may be understood as a process of utilizing the obtained fingerprint data for analyzing the multi-layer properties of a part of the geographical region represented by a respective tile of the altitude map. For this, the distribution of the altitudes provided by obtained fingerprints for a respective tile may be analyzed. For instance, a multi-layer estimation may determine whether a part of the geographical region represented by a respective tile of the altitude map is a single-layer area or a multi-layer area (multi-layer detection). In this regard, for instance, a multi-layer estimation may comprise determining whether an altitude distribution for a respective tile of the altitude map is unimodal (having a single peak in the altitude distribution or histogram and indicating a single-layer area) or multimodal (having multiple peaks in the altitude distribution or histogram and indicating a multi-layer area). Therein, the mean values of respective altitude clusters or the altitude values with the highest probability may be considered as the altitudes of the respective layers. For instance, a multi-layer estimation may comprise a clustering algorithm for determining the respective modes of an altitude distribution. In one example, the clustering algorithm or approach comprises an expectation-maximization algorithm. As an example, in case it is determined that a tile of the altitude map is a single layer area, a single altitude value may be determined based on an altitude estimate distribution associated with the respective tile of the altitude map to be used as the altitude value for the respective tile of the altitude map. On the other hand, in case it is determined that a tile of the altitude map represents a multi-layer area, multiple altitude values may be determined based on an altitude estimate distribution associated with the respective tile of the altitude map to be used as the altitude values for the respective tile of the altitude map.

In one approach the altitude map may be generated or updated based on captured or recorded tracks of users moving through parts of the region (and thus also the structures therein) associated with respective tiles of the altitude map. That is, the position information may comprise information on geographical tracks or routes of respective users.

In this regard, a layer of a structure is in particular understood to be a structural layer, a floor, a story or a level of the structure.

By performing a multi-layer estimation which additionally takes into account the geometric information about one or more structures in the region, the accuracy of the multi-layer estimation (that is of methods for determining multi-layer areas, their layer count and their layer altitudes) can be improved. An improvement can in particular be obtained in regions where a horizontal positioning tends to be imprecise and/or where the density of structures is comparably high, i.e. where there are lots of relatively small multi-layer structures that are relatively close to each other. To improve the quality of multi-layer estimations in those kinds of multi-layer areas is important especially when the altitude map is generated or learned based on crowd-sourcing data for improving the altitude estimation. Additionally, this may also improve estimating positioning maps (such as a map of radio signal strengths) as a function of the altitude. In the following, it will be explained in more detail, which geometric in formation in particular and how the respective geometric information may be taken into consideration for the multi-layer estimation.

According to an exemplary embodiment of the different aspects of the invention, the multi-layer estimation comprises determining a multi-layer property, a layer count and/or one or more layer altitudes for one or more tiles of the altitude map. A multi-layer property may indicate whether a respective tile of the altitude map represents a part of the region with a multi-layer structure (e.g. a multi-story building) or a single layer structure (e.g. a street), i.e. it may indicate the multi-layerness of the respective tile. A layer count may in particular be or indicate the number of floors, levels or stories of the structure for a respective tile. Consequently, the layer altitude may be or indicate the absolute or relative altitudes of respective floors, levels or stories for a respective tile.

According to an exemplary embodiment of the different aspects of the invention, the geometric information of the geographical map data about one or more structures in the region comprises one or more of
- location information about one or more structures;
- two-dimensional information about the geometry of one or more structures;
- a horizontal footprint of one or more structures;
- three-dimensional information about the geometry of one or more structures;
- a three-dimension model of one or more structures;
- information about horizontal outer boundaries of one or more structures;
- a height of one or more structures;
- an absolute altitude of a bottom of one or more structures; and/or
- a number of layers of one or more structures.

For instance, the geographical map data may comprise, as geometric information, two-dimensional building models which may represent the horizontal footprint of the structure. However, the geographical map data may also comprise three-dimensional structures. For instance, the structures may be model by three-dimensional polyhedra, which model the shapes and sizes of the structures in the geographical map data. The information on shapes and sizes of the structure, specifically outer boundaries or the footprint, may allow facilitating the multi-layer estimation with respect to the problem of identifying the areas, which have a common layer structure, or of identifying the positions at which a change in the layer structure can be expected. The information on an absolute altitude of a bottom of a structure or on a height of a structure may help verifying layer altitudes, which may be determined by the multi-layer estimation process.

In the following, it will inter alia be described how a uniform horizontal area may be utilized and determined with the help of the geometric information of the geographical map data.

According to an exemplary embodiment of the different aspects of the invention, the multi-layer estimation comprises determining, based on the geometric information about one or more structures in the region, one or more uniform horizontal areas in the altitude map, which can be assumed to represent in each case a part of the region with a uniform layer structure, in particular with a uniform layer count and/or uniform layer altitudes.

A uniform horizontal area may be understood as a geographically uniform or homogenous area with assumed uniform layer structure (such as layer count and/or layer altitudes). With respect to the altitude map, a uniform horizontal area may in particular comprise or extend over multiple tiles. Thus, a uniform horizontal area may also be considered as a unified area, because respective tiles share one or more properties with regard to the layer structure. For instance, the tiles may be combined in order to form a uniform horizontal area. Likewise, a uniform horizontal area may only partially comprise or extend over certain tiles. For this, respective tiles may be split, as will be explained in more detail below. Typically, a uniform horizontal area may basically correspond to the inner area of a structure or part thereof, as will also be explained in further detail below.

According to an exemplary embodiment of the different aspects of the invention, based on the geometric information about one or more structures in the region, at least one uniform horizontal area is determined such that a boundary thereof does at least in part not extend over a horizontal outer boundary of a corresponding structure.

For instance, the boundary of the at least one uniform horizontal area lies on the horizontal outer boundary of the corresponding structure (that is a structure in the part of the region that is represented by the respective area of the altitude map). For instance, the at least one uniform horizontal area lies within the horizontal outer boundary of the corresponding structure. Preferably, the boundary of uniform horizontal areas are designed or chosen such that no boundary of a uniform horizontal area extends over a horizontal outer boundary of a corresponding structure. For instance, the multi-layer estimation is restricted such that one estimated uniform horizontal area never extends over the horizontal bounds of any two-dimensional or three-dimensional building model.

As already mentioned and as will be described in more detail below, it may be advantageous to adapt or amend one or more tiles of the altitude map in order to achieve such a corresponding design of the uniform horizontal areas and the outer boundaries of the structures. For instance, each of one or more tiles of the altitude map may be split into two or more tiles (which may be regarded as sub-tiles). Also, two or more tiles of the altitude map may be merged or combined into one tile. The presence of geometric information of the geographical map data (such as building models etc.) may be regarded as a necessary condition in the multi-layer estimation for generating or creating a respective uniformity of the layer structure in the corresponding area of the altitude map.

This described embodiment allows for a reliable estimation of multi-layer areas and their boundaries. Moreover, any data indicating a multi-layer structure outside of the assumed boundaries (which may be the case due to horizontal position errors in the fingerprint data, for instance) can then be more easily marked or detected as an outlier.

According to an exemplary embodiment of the different aspects of the invention, the determining of one or more uniform horizontal areas in the altitude map comprises splitting one or more tiles of the altitude map, such that each tile represents a part of the region only comprising a single structure in the region.

A splitting may comprise inserting grid points or edges into the tile structure of the altitude map, for instance. The splitting of the one or more tiles may be based on the geometric information of the geographical map data. As a result of the preformed splitting, each tile (or sub-tile) may represent a part of the region only overlapping with a single structure. As already mentioned, it may likewise be advantageous to merge or combined two or more tiles of the altitude map in order to adapt the structure of the altitude map to the geometric information of the geographical map data.

According to an exemplary embodiment of the different aspects of the invention, based on the geometric information about structures in the region, at least one uniform horizontal area is determined such that it matches with an area in the altitude map representing a part of the region known to have a uniform layer structure.

For instance a structure (e.g. a building) or a part thereof may be known to have a uniform layer structure. Thus, the uniform horizontal area may be determined such that it matches with the footprint of the respective structure (e.g. building). In this embodiment the geometric information of the geographic map data (such as a detailed venue map) may be regarded as a necessary and sufficient condition for having a respective uniformity of layer structure in the respective area of the altitude map. In this embodiment, the multi-layer estimation can be restricted such that an estimated uniform horizontal area exactly matches with an area that is known to have a uniform layer structure based on the detailed (e.g. three-dimensional) geographical map data.

According to an exemplary embodiment of the different aspects of the invention, the multi-layer estimation comprises, based on the geometric information about structures in the region, determining tiles of the altitude map representing a part of the region not comprising a structure to be single-layer areas. This approach may be used especially if it is known that all structures in the region represented by the altitude map are represented by the geographical map data (e.g. if it is known that all structures in the region are represented by a respective model in the geographical map data). In other words, the areas that are not covered by a respective model can be detected as single-layer areas in areas where all the structures are known to have a (two dimensional or three dimensional) model. In this embodiment as well, the presence of the geographical information of the geometric map data can be regarded as a necessary and sufficient condition for determining multi-layer structures.

In the following, it will in particular be described how the geometric information of the geographical map data may be used as a constraint in estimating the number of layers and altitudes of layers.

According to an exemplary embodiment of the different aspects of the invention, the multi-layer estimation, based on the geometric information about structures in the region, is restricted such that an estimated layer count or a sum of layer heights for a tile is in accordance with a height of a structure in a part of the region represented by the respective tile. For instance, the maximum number of layers (e.g. floors) for the respective tile is restricted or limited. For instance, the maximum number of layers for a part of the region can be estimated from the geometric information of a respective structure being in that part of the region, specifically from the total height of the structure by additionally knowing or assuming a typical average or minimum layer height. With this information the multi-layer estimation can then be restricted such that the number of layers output by the multi-layer estimation times the known or assumed layer height and/or sum of the estimated layer heights determined by the multi-layer estimation does not exceed the total height of the structure.

According to an exemplary embodiment of the different aspects of the invention, the multi-layer estimation, based on the geometric information about structures in the region, is restricted such that one or more determined layer altitudes for a tile have to be in accordance with an altitude and optionally a height of a structure in a part of the region represented by the respective tile. Herein, in contrast to a height of a structure, the altitude of the structure is particularly understood to be an absolute altitude. This approach may be understood as an absolute altitude restriction for the multi-layer estimation. More specifically, the multi-layer estimation may be restricted such that too high and/or too low layer altitudes are not allowed, when the geometric information of a structure model includes the (absolute) altitude of the structure top and/or typically bottom (e.g. an altitude with respect to a reference altitude such as the mean sea level or the WGS 84 reference ellipsoid) and optionally the (relative) height of the structure. The absolute altitude of the bottom of the structure and the relative height allow for determining the absolute altitude of the top of the structure. In any case, the altitude covered by the structure may set respective upper and/or lower bounds for determining the layer altitudes within the multi-layer estimation process.

According to an exemplary embodiment of the different aspects of the invention, the multi-layer estimation, based on the geometric information about structures in the region, is restricted such that an estimated layer count for a tile has to be in accordance with a layer count of a structure in a part of the region represented by the respective tile. This approach may be understood as a true layer number restriction for the multi-layer estimation. With this approach a constraint based on the true number of layers may be used in the multi-layer estimation. The true number of layers is in particular understood to be an exact number of layers, which may in particular be known from the geometric information of the geographical map data (for instance in case the geometric information comprises a three-dimensional model of the structure including individual floors of the structure). As a result, the multi-layer estimation may be restricted such that the number of layers output by the multi-layer estimation matches with the true number of layer, when the true number of layers is known based on the respective geometric information of the geographical map data for the structure.

According to an exemplary embodiment of the different aspects of the invention, the multi-layer estimation comprises an outlier detection for eliminating fingerprint data with erroneous horizontal location data.

When taking into account the geometric information as described above, altitude information comprised by the fingerprints whose horizontal positions are erroneously estimated to be in an incorrect area (e.g. another structure's area or in a single-layer area) will typically be in the minority in this incorrect area. Therefore, fingerprints with altitude information having erroneous horizontal positions can be detected using an outlier detection algorithm or a robust estimation method to be excluded. For example, if only a small number (e.g. below a predefined threshold) of fingerprints with altitude information indicates the potential existence of a certain layer (e.g. by being assigned to a cluster in the multi-layer estimation algorithm), this layer may be discarded, because these fingerprints or measurements are the ones leaking into neighboring areas. Such fingerprints or measurements are typically relatively few because now the incorrect area is separated from the true area of the structure in the altitude map based on the geometric information.

According to an exemplary embodiment of the different aspects of the invention, the method further comprises:
- estimating a position of a mobile device based on radio measurements observed at the mobile device and the altitude map.

The mobile device may in particular measure signals of its radio environment. The estimation of the position may be performed by the mobile device or by a remote server, which may receive the radio measurements from the mobile device. For this a radio map comprising radio environment data may be used. The altitude map can now facilitate the determination of the vertical position or altitude of the mobile device, because it may provide information on the layer structure for parts of the region associated with respective tiles of the altitude. The determination of the vertical position or the altitude of the mobile device can further facilitate learning layer-specific information on the radio environment. For this, a determined layer structure can be associated with the radio environment data, for instance.

Thus, according to an exemplary embodiment of the different aspects of the invention, the method further comprises:
- associating radio environment data with one or more layers determined with the multi-layer estimation for one or more tiles (62) of the altitude map (60a, 60b, 60c).

The radio environment data may comprise or be based on radio measurements collected with radio fingerprints, as explained earlier. By associating radio environment data with one or more determined layers the precision of a determination of a vertical position of a mobile device, which position is to be estimated based on radio measurements, can be improved.

Other features of the invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not drawn to scale and that they are merely intended to conceptually illustrate the structures and procedures described herein.

### BRIEF DESCRIPTION OF THE DRAWINGS

- Fig. 1: is a block diagram of a system with exemplary apparatuses according to the invention;
- Fig. 2: is a block diagram of an exemplary apparatus according to the different aspects of the invention;
- Fig. 3: is a block diagram of an exemplary mobile device according ot the different aspects of the invention;
- Fig. 4: is a flow chart illustrating an example embodiment of a method according to the invention;
- Fig. 5: is a schematic illustration for visualizing collected fingerprint data of a region;
- Fig. 6a,b: is a schematic illustration of an altitude map determined based on a multi-layer estimation using the fingerprint data illustrated in Fig. 5 and not utilizing the invention;
- Fig. 6c: is a schematic illustration of an altitude map determined based on a multi-layer estimation using the fingerprint data illustrated in Fig. 5 and utilizing the invention; and
- Fig. 7: is a schematic illustration of examples of tangible storage media according to the invention.

### DETAILED DESCRIPTION OF EXAMPLE EMBODIMENTS OF THE INVENTION

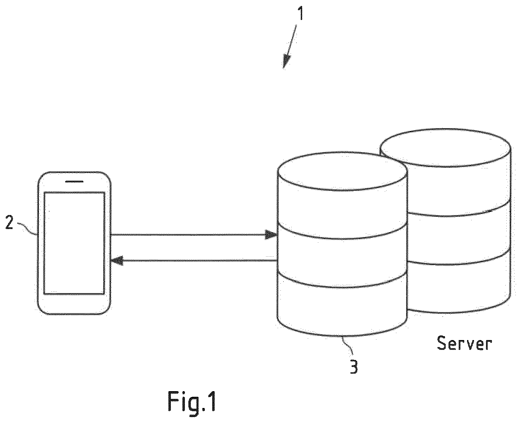

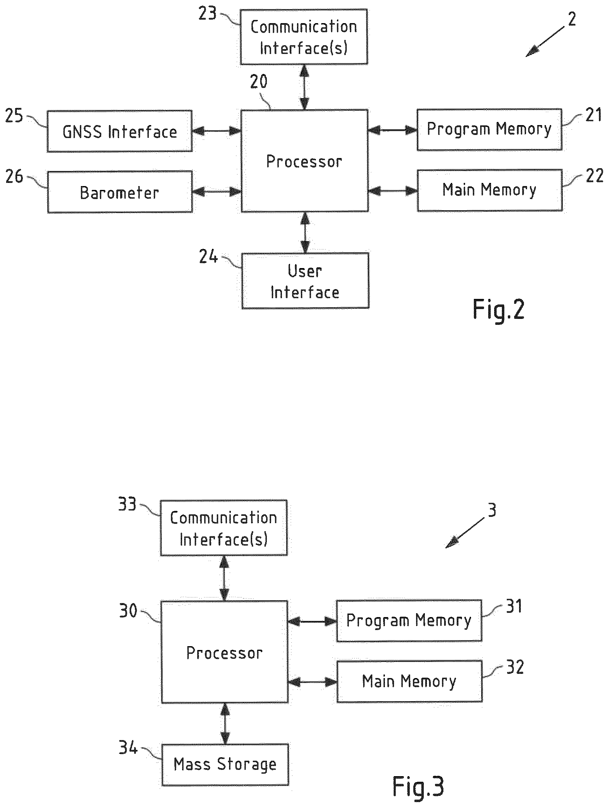

Fig. 1 is a block diagram of a system 1 of a mobile device 2 and a server 3, which may both be exemplary embodiments of an apparatus according to the invention and which may separately or together perform exemplary embodiments of the method according to the invention. The details of mobile device 2 and server 3 are described with respect to Fig. 2, which is an exemplary block diagram of the mobile device 2 of Fig. 1, and Fig. 3, which is an exemplary block diagram of the server 3 of Fig. 1.

For instance, the mobile device 2 may be a part of or may be a cellular phone, a personal digital assistant, a laptop computer, a tablet computer or a wearable.

In particular, mobile device 2 may be used for taking radio measurements and estimating a position of the mobile device. Thus, mobile device 2 may acquire fingerprint data and specifically radio fingerprint data as described herein (i.e. at least comprising position information comprising altitude information and specifically also comprising radio measurements associated with the position information). In the following the radio fingerprint data shall be considered as a non-limiting example of fingerprint data. Mobile device 2 may be one device of a plurality of devices acquiring such fingerprint data in a crowd-sourcing process. Thus, mobile device 2 may support generating and updating an altitude map as described herein. The mobile device 2 may sent acquired fingerprint data to server 3.

Also, mobile device 2 may be seen as an example of a device which may be positioned based on an altitude map as described herein. For this, the mobile device may likewise observe and measure its radio environment. Based on such measurements and an altitude map, the mobile device 2 and/or the server 3 may then be able to determine the position of the mobile device 2.

Server 3 may be a server located remote from mobile device 2, for instance. Server 3 may also comprise multiple devices and/or may be realized as a computer cloud, for instance. Server 3 may in particular store and collect radio fingerprint data received from mobile devices, such as mobile device 2. Server 3 may in particular generate and update altitude maps (in particular a multi-layer estimation as described herein) and/or determine positioning estimates of mobile devices based on altitude maps.

Turning now to Fig. 2, while the mobile device 2 may generally be configured to determine altitude information, e.g. based on signals from a Global Navigation Satellite System (GNSS) or a barometer. Such a determination may still be challenging, in particular for indoor situations. For instance, there may be no reception of GNSS signals, the GNSS signals may be too weak in order to get reliable location information or the GNSS signals may suggest a reliable position estimate while in fact the quality is poor. The mobile device 2 may also be capable of determining horizontal position information, which may also be based on signals from a GNSS and/or inertial sensors (not shown) of the mobile device 2. Further, the mobile device 2 is also capable of observing measurements of the radio environment. The described information may be comprised by radio fingerprint data. These and other capabilities of the mobile device 2 will also be described below.

The mobile device 2 comprises a processor 20. Processor 20 may represent a single processor or two or more processors, which are for instance at least partially coupled, for instance via a bus. Processor 20 executes a program code stored in program memory 21 (for instance program code causing mobile device 2 to perform embodiments of the method according to the invention (or parts thereof), when executed on processor 20), and interfaces with a main memory 22. Some or all of memories 21 and 22 may also be included into processor 20. One of or both of memories 21 and 22 may be fixedly connected to processor 20 or at least partially removable from processor 20, for instance in the form of a memory card or stick. Program memory 21 may for instance be a nonvolatile memory. It may for instance be a FLASH memory (or a part thereof), any of a ROM, PROM, EPROM and EEPROM memory (or a part thereof) or a hard disc (or a part thereof), to name but a few examples. Program memory 21 may also comprise an operating system for processor 20. Program memory 21 may for instance comprise a first memory portion that is fixedly installed in mobile device 2, and a second memory portion that is removable from mobile device 2, for instance in the form of a removable SD memory card. Main memory 22 may for instance be a volatile memory. It may for instance be a RAM or DRAM memory, to give but a few non-limiting examples. It may for instance be used as a working memory for processor 20 when executing an operating system and/or programs. One or more radio fingerprints that are observed by mobile device 2 may for instance be stored in program memory 21 and or main memory 22.

Processor 20 further controls a communication interface 23 configured to receive and/or output information. For instance, communication interface 23 may be configured to send and/or receive data to/from server 3. Mobile device 2 may be configured to communicate with server 3 of system 1 (see Fig. 1). This may for instance comprise sending information such as radio fingerprints observed by the mobile device 2 to server 3. The communication may for instance be based on a (e.g. partly) wireless connection. The communication interface 23 may thus comprise circuitry such as modulators, filters, mixers, switches and/or one or more antennas to allow transmission and/or reception of signals, e.g. for the communication with server 3. In embodiments of the invention, communication interface 23 is inter alia configured to allow communication according to a 2G, 3G, 4G and/or 5G cellular communication system and/or a non-cellular communication system, such as for instance a WLAN network. Nevertheless, the communication route between mobile device 2 and server 3 may equally well at least partially comprise wire-bound portions. For instance, server 3 may be connected to a back-bone of a wireless communication system (associated with mobile terminal 2) via a wire-bound system such as for instance the internet.

Processor 20 further controls a user interface 24 configured to present information to a user of mobile device 20, such a position estimate, and/or to receive information from such a user, such as manually input position fixes or the like. User interface 24 may for instance be the standard user interface via which a user of mobile device 2 controls other functionality thereof, such as making phone calls, browsing the Internet, etc.

Processor 20 may further control a GNSS interface 25 configured to receive positioning information, that is in particular (absolute) altitude information and (absolute) horizontal position information, of an GNSS such as Global Positioning System (GPS), Galileo, Global Navigation Satellite System (i.e. "Globalnaja Nawigazionnaja Sputnikowaja Sistema", GLONASS) and Quasi-Zenith Satellite System (QZSS). It should be noted that, even in case mobile device 2 has a GNSS interface 25, the user of mobile device 2 can still benefit from using positioning technologies based on other approaches, such as an approach based on radio fingerprints and/or altitude maps as described herein, since these technologies may provide a higher accuracy in challenging environments for GNSS-based technologies.

The mobile device 2 may further comprise a barometer 26. For this, processor 10 further controls the barometer 26 for measuring the ambient pressure at (or close to) the location of the mobile device. Thus, mobile device may automatically and/or repeatedly obtain pressure information. The barometer 26 may be used for obtaining relative altitude information.

The components 21-26 of mobile device 2 may for instance be connected with processor 20 by means of one or more serial and/or parallel busses.

Turning now to Fig. 3, an exemplary block diagram of server 3 of Fig. 1 is shown. Similarly to Fig. 2, server 3 comprises a processor 30. Processor 30 may represent a single processor or two or more processors, which are for instance at least partially coupled, for instance via a bus. Processor 30 executes a program code stored in program memory 31 (for instance program code causing server 3 to perform embodiments of the method according to the invention (or parts thereof), when executed on processor 30). Processor 30 further interfaces with a main memory 32 (for instance acting as a working memory) and a mass storage 34, which may for instance collect and store a plurality of radio fingerprints received and acquired by mobile devices (such as mobile device 2).

Processor 30 further controls a communication interface 33 configured to receive and/or output information. For instance, server 3 may be configured to communicate with mobile device 2 of system 1, as already described with respect to Figs. 1 and 2.

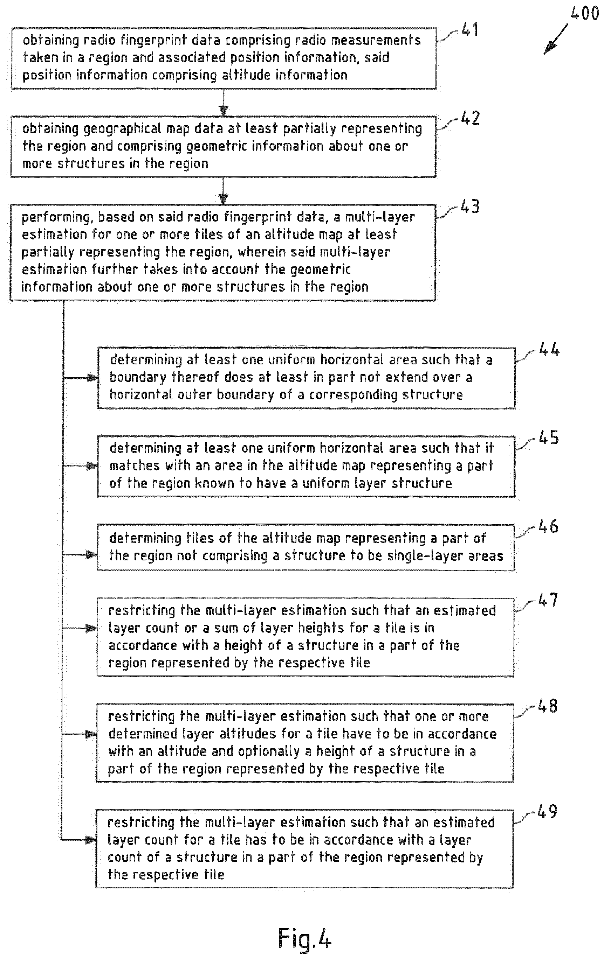

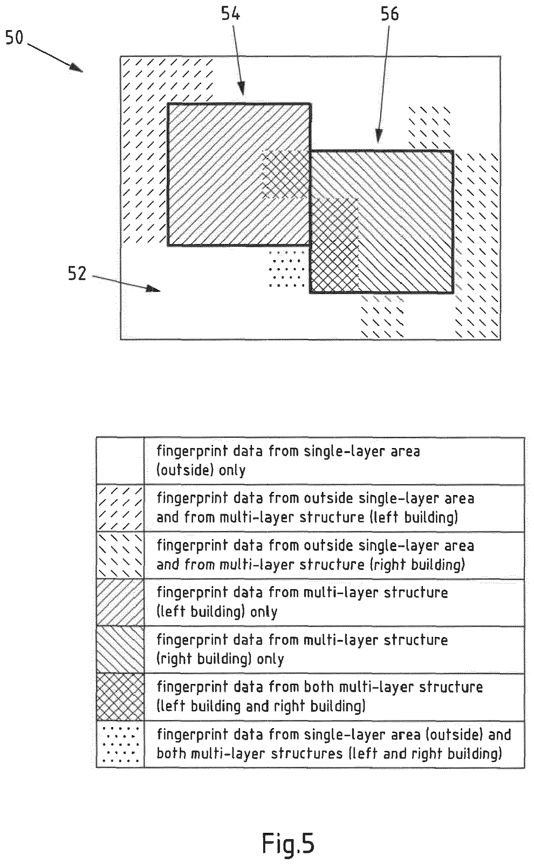

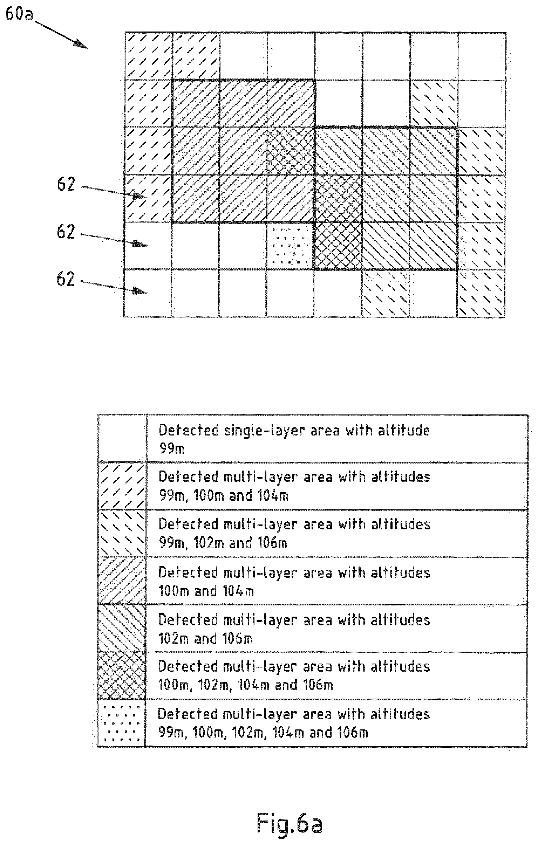

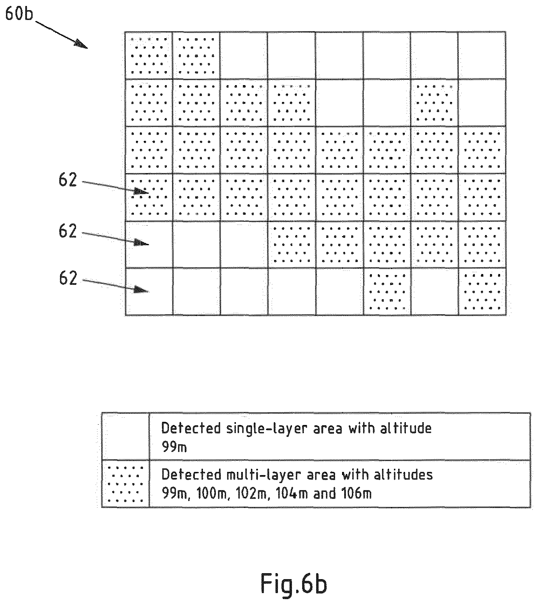

Turning now to Fig. 4, a flow chart 40 illustrating exemplary embodiments of the method according to the invention is described in further connection with Figs. 5 and 6a, b schematically visualizing the effects of the invention. In the following it is in particular referred to buildings as examples of structures in the region. However, the following explanations can likewise pertain to structures other than a building.

In action 41, radio fingerprint data is obtained (e.g. at the server 3 from a plurality of mobile devices such as mobile device 2) comprising radio measurements taken in a region and associated position information comprising altitude information.

A schematic illustration for visualizing such collected radio fingerprint data of a region 50 with multi-layer structures is now shown in Fig. 5 together with an explanatory legend. The multi-layer structures are a left building 54 and a right building 56 in this example. Due to the various effects described herein, the horizontal positions of the altitude information may be imprecise. While in the buildings 54, 56 mainly fingerprint data of only the correct respective building is collected (hatched) and while in the outside area 52, there is mainly fingerprint data from the outside area with a single altitude (white), there is obviously also erroneous or imprecise fingerprint data. For instance, there is altitude information indicating a multi-layer structure in the actually single-layer outside region 52 (dashed hatching) due to the nearby buildings 54, 56. Also, there is a mixture of the altitude data of both buildings 54, 56 in some parts of the buildings where a building is close to the respective other building (cross hatching). Lastly, there is even an area, where there is collected fingerprint data which mixes altitude information of the outside area 52 and of both buildings 54, 56 (dotted).

In the prior art, a multi-layer estimation for one or more tiles of an altitude map at least partially representing the region would now be performed based on such radio fingerprint data without any knowledge about geometric information about one or more structures in the region.
A schematic example of an exemplary altitude map 60a indicating the results of a multi-layer estimation process together with an explanatory legend is shown in Fig. 6a. Generally, such an altitude map 60a comprises a plurality of tiles 62, which are rectangular in this example, but can take other forms as well. The tiles 62 represent respective parts of the geographic region 50 (see Fig. 5).

Generally, such an the altitude map is created by dividing the Earth surface into small horizontal areas and a multi-layer estimation process may use the samples hitting each tile to learn the altitude distribution within that small tile. If the altitude distribution is unimodal (i.e. a single peak in the probability distribution), the tile is detected as a single-layer area and the mode (=the greatest probability) altitude is the altitude map value inside that tile. If the altitude distribution is found to be multimodal by e.g. a clustering algorithm (multiple peaks in the probability distribution or histogram), the tile is determined to be a multi-layer area and the mean values of the altitude clusters are determined to be the layer altitudes.

Because the multi-layer estimation process does not utilize geometric information and the tiles are relatively small (compared to the building structure), a multi-layer estimation process would estimate the structure of each tile 62 individually, resulting in tiles with seven different kinds of layer structures:
- tiles correctly detected as a single layer with an altitude of 99m (white);
- tiles erroneously detected as a multi-layer structure with altitudes of 99m, 100m, 104m or with altitudes of 99m, 102m, 106m (dashed hatching);
- tiles correctly detected as multi-layer structures with altitudes of 100m, 104m or with altitudes of 102m, 106m (hatched);
- tiles correctly detected as multi-layer structures but with erroneous altitudes of 100m, 102m, 104m, 106m (cross hatching);
- tiles erroneously detected as a multi-layer structure with altitudes of 99m, 100m, 102m, 104m, 106m (dotted).

Even though no geometric information was considered in this approach, this example illustrates that also for the approach according to the invention described further below, the size of the tiles and/or of uniform horizontal areas should not be to chosen too small.

An alternative approach for determining an altitude map 60b, which also does not utilize knowledge about geometric information about one or more structures in the region, is shown in Fig. 6a, showing a schematic illustration of an altitude map 60b with explanatory legend similar to Fig. 6a. In this approach it is assumed that all tiles, which are connected and detected as a multi-layer area belong to a single uniform multi-layer area. As can be seen in Fig. 6b, this leads to an altitude map with two different kinds of layer structures:
- tiles correctly detected as a single layer with an altitude of 99m (white);
- tiles erroneously detected to be a single large multi-layer area with mixed altitudes of 99m, 100m, 102m, 104m and 106m, again because the altitude data from the two buildings are mixed and the detected multi-layer area leaks outside the true building areas.

Even though no geometric information was considered in this approach, this example illustrates that also for the approach according to the invention described further below, the size of the tiles and/or of uniform horizontal areas should not be to chosen too large.

In order to overcome the deficiencies of the altitude maps 60a, 60b illustrated in Fig. 6a and Fig. 6b above, geographical map data is obtained (e.g. at server 3 from a memory) at least partially representing the region and comprising geometric information about one or more structures in the region (action 42).

It is now suggested that the multi-layer estimation for one or more tiles of an altitude map at least partially representing the region is performed not only based on the radio fingerprint data. Rather, the multi-layer estimation further takes into account the geometric information about one or more structures in the region (action 43).

Such geometric information about one or more structures in the region may have various forms. One example is a two- or three-dimensional map of a city. Such three dimensional maps of buildings and structures of a city are becoming more and more prevalent. For example, certain maps include "extruded buildings" for several major cities, which are three dimensional polyhedra that represent the shapes and sizes of the structures. Two dimensional building models which only represent the horizontal footprint of the structure may also be available. Furthermore, some selected buildings and structures may have more detailed three dimensional venue maps, which could include e.g. the number of floors in each location of the building. A building model can represent any kind of multi-layer structure including human-habitable buildings, (underground) parking halls, bridges, and tunnels.

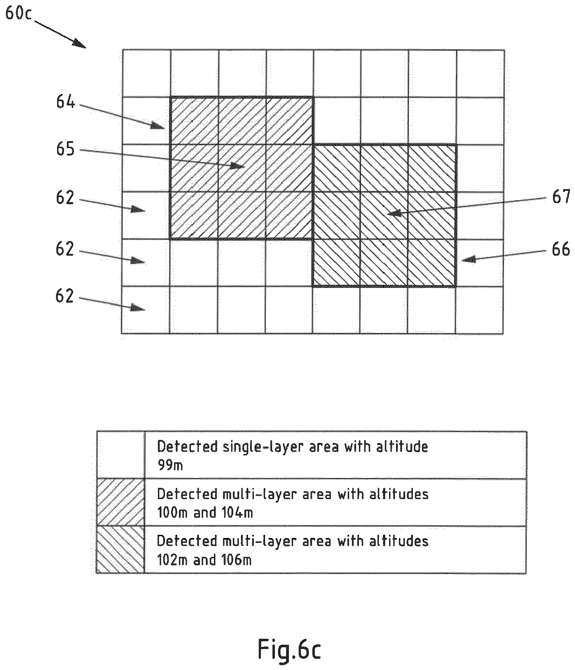

A result of a multi-layer estimation additionally taking into account geometric information of structures in the region (i.e. buildings 54, 56 shown in Fig. 5) is illustrated in Fig. 6c, showing a schematic illustration of an altitude map 60c with an explanatory legend similar to Figs. 6a and 6b. The geometric information of the buildings taken into account is illustrated in Fig. 6c as the footprint 64, 66 of the respective buildings 54, 56. However, this time, as can be seen, the multi-layer estimation correctly separates the two multi-layer areas of the two buildings, by assuming uniform horizontal areas 65, 67 as the multi-layer area inside the footprint 64 (with uniform detected layer altitudes of 100m and 104m throughout the whole footprint 64) and the multi-layer area inside of the footprint 66 (with uniform detected layer altitudes of 102 and 106m throughout the whole footprint 66). Also, the outside single-layer area (with a detected layer altitude of 99m) is detected correctly.

As illustrated, with this approach, the areas outside any structure or building can be detected as single-layer areas and the building-originated data can more easily be detected and excluded from the altitude estimation. Furthermore, the layer structures can be estimated separately for different structures and, for a specific structure, data originating from other adjacent structures can be excluded.

In the following different examples (which may be used independently or in combination) are described of how the multi-layer estimation may take into account the geometric information about one or more structures in the region.

Actions 44 to 46 focus on determining uniform horizontal areas (also referred herein as unified multi-layer areas, i.e. geographically-unified areas within which the number and altitudes of the layers are constant) with the help of building models or building maps.

For instance, at least one uniform horizontal area may be determined such that a boundary thereof does at least in part not extend over a horizontal outer boundary of a corresponding structure (action 44).

The multi-layer estimation can be restricted such that one estimated uniform horizontal area never extends over the horizontal bounds of any two-dimensional or three-dimensional building model. Any data, that leaks outside of the boundaries due to horizontal position errors, can be indicated as outliers. In an example algorithm for a multi-layer estimation the multi-layer property of a small geographical area (i.e. a tile) is detected and the numbers of layers and layer altitudes are estimated with a clustering algorithm such as the expectation-maximization-based (EM-based) fitting of a Gaussian mixture model. Therein, each cluster may correspond to one layer or floor. The input to such a multi-layer detection algorithm is a set of altitude values measured in the said small geographical area. The problem, however, with this approach is that the geographical areas (e.g. of constant size) cannot take into account the actual structures without a map of the structures.

Now, if a tile or small horizontal area overlaps with several building models and/or non-modeled areas, the respective small horizontal area can be split into parts using the building models, such that each resulting tile only overlaps with one building model. When then altitude data from only one tile is used in one multi-layer estimation instance, each estimated layer structure will include only the layers of one building and the data of multiple buildings is not mixed in the multi-layer estimation. Due to this, altitude measurements whose horizontal locations are estimated wrongly to be in another building's area or in a single-layer area will be in minority in the area. Therefore, measurements with wrong horizontal locations can potentially be detected using an outlier detection algorithm or a robust estimation method and excluded. For example, if only a small portion of measurements is assigned to a cluster in a multi-layer estimation algorithm, this cluster (representing a layer or floor) may be discarded, as these are the leaked measurements, and they are relatively few because the leaked area is already separated from the true building area by the building model.

In a further example, at least one uniform horizontal area may be determined such that it matches with an area in the altitude map representing a part of the region known to have a uniform layer structure (action 45).

The multi-layer estimation can be restricted such that an estimated uniform horizontal area exactly matches with an area that is known to have a uniform layer structure based on detailed three-dimensional map data, which contains the layer altitudes in each horizontal location. In this way layers of different areas do not get mixed, and all data from one of such areas can be combined when estimating the layer altitudes.

In a multi-layer estimation process this can be implemented by choosing exactly those small geographical areas or tiles that cover the area known to have a uniform layer structure and using their and only their altitude values in the multi-layer estimation algorithm. In this way, the obtained layer structure will include only layers of one are with a uniform layer structure, and the data of multiple of such areas are not mixed in the multi-layer estimation. Furthermore, altitude measurements whose horizontal locations are estimated wrongly to be in the area of another building or in a single-layer area (such as in the street) will be in the minority within their respective areas. Therefore, measurements with wrong horizontal locations can potentially be detected using an outlier detection algorithm or a robust estimation method and excluded. A difference from the example described before is that in that case the layer structure may be allowed to change within one structure but forced to change at structure boundaries, while in this case the uniform horizontal areas are known exactly.

In a further example, tiles of the altitude map representing a part of the region not comprising a structure may be determined to be single-layer areas (action 46).

The areas that are not covered by any building model can be detected as single-layer areas in areas where all buildings and multi-layer structures are known to have a two-dimensional or three-dimensional building model. Thus, all the observations of an alleged multi-layemess (due to leaked measurements) can be detected as outliers in the single-layer areas. For example, if an area is known to be a single-layer area, only the cluster with the highest measurement count is the estimated altitude and the rest of the altitude measurements are interpreted as outliers. This method removes false detections of multi-layer areas due to e.g. inaccurate horizontal or vertical reference positions.

Actions 47 to 49 focus on utilizing three-dimensional building models or detailed three-dimensional maps as a constraint in estimating the number of layers and their altitudes.

For instance, the multi-layer estimation may be restricted such that an estimated layer count or a sum of layer heights for a tile is in accordance with a height of a structure in a part of the region represented by the respective tile (action 47).

In this case, a maximum number of layers or floors can be estimated from the height of the three-dimensional building model by assuming some typical minimum layer height. The multi-layer estimation can then be restricted such that the output number of layers times the assumed layer height and/or sum of the estimated layer height does not exceed the three-dimensional model height. Typically, the layer heights of a multi-layer structure are above some minimum value hₘᵢₙ, e.g. 3.5m. Using the height of the building h_{build} indicated by the three-dimensional building model, the maximum number of layers in the building is nₘₐₓ = h_{build}/hₘᵢₙ. Therefore, the multi-layer estimation algorithm can be restricted such that the output number of layers is at most nₘₐₓ. In one example, the number of layers is determined by minimizing an information criterion such as the Akaike information criterion, the Bayesian information criterion, or the Deviance information criterion. In this algorithm, the information on the maximum number of layers can be used by minimizing the information criterion within the set {1,2,...,nₘₐₓ} number of layers. Furthermore, if the difference between the highest and the lowest estimated layer altitudes exceeds the height of the building, either the highest or the lowest estimated layer can be discarded, so that the estimated layer heights match with the building height.

In a further example, the multi-layer estimation may be restricted such that one or more determined layer altitudes for a tile have to be in accordance with an altitude and optionally a height of a structure in a part of the region represented by the respective tile (action 48).

The multi-layer estimation can be restricted such that too high or too low layer or floor altitudes are not allowed, when a three-dimensional building model includes the height and the absolute altitude of the building bottom (i.e. altitude with respect to a reference altitude such as the mean sea level or the WGS 84 reference ellipsoid). In the example of a clustering method, this can be implemented by excluding all the altitude measurements from the clustering that are outside the known range of building altitudes. The difference from the previously described approach is that in that case the building's absolute altitude is not used and the multi-layer estimation is restricted only by the number of layers and sum of layer heights, not by absolute altitude limits.

In a further example, the multi-layer estimation may be restricted such that an estimated layer count for a tile has to be in accordance with a layer count of a structure in a part of the region represented by the respective tile (action 49).

The multi-layer estimation can be restricted such that the output number of layers will match with the true number of layers, when the true number of layers is known based on a detailed three-dimensional map. Based on the detailed three-dimensional map, the exact number of layers is known to be, say, n_{f} and the multi-layer estimation algorithm can thus be restricted such that the output number of layers will match exactly with the true number of layers. In the example of a clustering method, this can be implemented by fixing the number of clusters into n_{f} instead of the information criterion minimization. The difference from this approach is that in the case of information criterion minimization only an upper bound for the number of layers is estimated and used, while in this case the number of layers is known exactly. Specifically, this case and the above described case of parts of the region known to have a uniform layer structure can be combined such that the above described case is first used to determine the coverages of the uniform horizontal areas, after which this method is used to determine the number of layers in each uniform horizontal areas.

In some cases the geometric information on the structures only shows the parts of the structures that are above the ground. In this case, the proposed approaches can be applied to the layers that are estimated to be above the ground level. The ground level altitudes around a structure can be obtained from an altitude map that can e.g. originate from satellite imaging or be estimated with crowdsourced data.

The proposed approaches improve the accuracy of the methods for detecting multi-layer areas, their layer count and their layer altitudes. Improvement is obtained especially in areas where horizontal positioning tends to be imprecise and/or where the building density is high, i.e. there are lots of relatively small multi-layer structures that are relatively close to each other. This kind of detection of multi-layer areas is important when the altitude map is learned with crowd-sourcing to be used in improving altitude estimation and also when estimating some positioning maps (such as a map of radio signal strengths) as a function of the altitude.

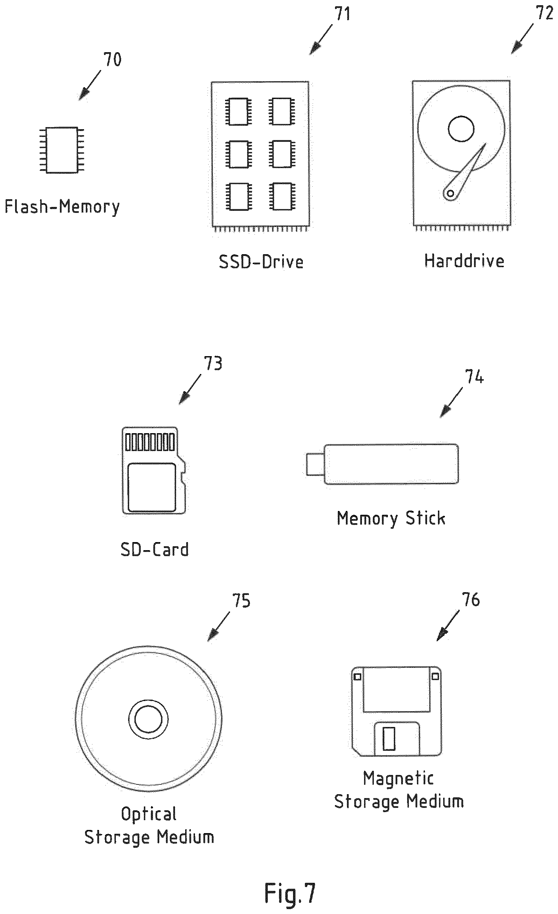

Fig. 7 is a schematic illustration of examples of tangible storage media according to the present invention, that may for instance be used to implement program memory 21 of Fig. 2 and/or program memory 31 of Fig. 3. To this end, Fig. 7 displays a flash memory 70, which may for instance be soldered or bonded to a printed circuit board, a solid-state drive 71 comprising a plurality of memory chips (e.g. Flash memory chips), a magnetic hard drive 72, a Secure Digital (SD) card 73, a Universal Serial Bus (USB) memory stick 74, an optical storage medium 75 (such as for instance a CD-ROM or DVD) and a magnetic storage medium 76.

The following embodiments are also disclosed:
Embodiment 1:
   Method, performed by at least one apparatus, the method comprising:
   - obtaining (41) fingerprint data at least comprising position information collected by a mobile device (2) in a region (50), said position information comprising altitude information;
   - obtaining (42) geographical map data at least partially representing the region (50) and comprising geometric information (64, 66) about one or more structures (54, 56) in the region (50); and
   - performing (43), based on said fingerprint data, a multi-layer estimation for one or more tiles (62) of an altitude map 60a, 60b, 60c) at least partially representing the region (50), wherein said multi-layer estimation further takes into account the geometric information (64, 66) about one or more structures (54, 56) in the region (50).
Embodiment 2:
   The method according to embodiment 1, wherein said multi-layer estimation comprises determining a multi-layer property, a layer count and/or one or more layer altitudes for one or more tiles (62) of the altitude map (60a, 60b, 60c).
Embodiment 3:
   The method according to embodiment 1 or 2, wherein the geometric information (64, 66) of the geographical map data about one or more structures (54, 56) in the region (50) comprises one or more of
   - location information about one or more structures;
   - two-dimensional information about the geometry of one or more structures;
   - a horizontal footprint of one or more structures;
   - three-dimensional information about the geometry of one or more structures;
   - a three-dimension model of one or more structures;
   - information about horizontal outer boundaries of one or more structures;
   - a height of one or more structures;
   - an absolute altitude of a bottom of one or more structures; and/or
   - a number of layers of one or more structures.
Embodiment 4:
   The method according to any of embodiments 1 to 3, wherein the multi-layer estimation comprises determining, based on the geometric information (64, 66) about one or more structures (54, 56) in the region (50), one or more uniform horizontal areas (65, 67) in the altitude map (60a, 60b, 60c), which can be assumed to represent in each case a part of the region (50) with a uniform layer structure, in particular with a uniform layer count and/or uniform layer altitudes.
Embodiment 5:
   The method according to embodiment 4, wherein, based on the geometric information (64, 66) about one or more structures (54, 56) in the region (50), at least one uniform horizontal area (65, 67) is determined such that a boundary thereof does at least in part not extend over a horizontal outer boundary of a corresponding structure.
Embodiment 6:
   The method according to embodiment 4 or 5, wherein said determining of one or more uniform horizontal areas (65, 67) in the altitude map (60a, 60b, 60c) comprises splitting one or more tiles (62) of the altitude map (60a, 60b, 60c), such that each tile (62) represents a part of the region (50) only comprising a single structure (54, 56) in the region (50).
Embodiment 7:
   The method according to any of embodiments 4 to 6, wherein, based on the geometric information (64, 66) about structures (54, 56) in the region (50), at least one uniform horizontal area (65, 67) is determined such that it matches with an area in the altitude map (60a, 60b, 60c) representing a part of the region (50) known to have a uniform layer structure.
Embodiment 8:
   The method according to any of embodiment s 1 to 7, wherein said multi-layer estimation comprises, based on the geometric information (64, 66) about structures (54, 56) in the region (50), determining tiles (62) of the altitude map (60a, 60b, 60c) representing a part (52) of the region (50) not comprising a structure to be single-layer areas.
Embodiment 9:
   The method according to any of embodiments 1 to 8, wherein the multi-layer estimation, based on the geometric information (64, 66) about structures (54, 56) in the region (50), is restricted such that an estimated layer count or a sum of layer heights for a tile (62) is in accordance with a height of a structure (54, 56) in a part of the region (50) represented by the respective tile (62).
Embodiment 10:
   The method according to any of embodiments 1 to 9, wherein the multi-layer estimation, based on the geometric information (64, 66) about structures (54, 56) in the region (50), is restricted such that one or more determined layer altitudes for a tile (62) have to be in accordance with an altitude and optionally a height of a structure (54, 56) in a part of the region (50) represented by the respective tile (62).
Embodiment 11:
   The method according to any of embodiments 1 to 10, wherein the multi-layer estimation, based on the geometric information (64, 66) about structures (54, 56) in the region (50), is restricted such that an estimated layer count for a tile (62) has to be in accordance with a layer count of a structure (54, 56) in a part of the region (50) represented by the respective tile (62).
Embodiment 12:
   The method according to any of embodiments 1 to 11, wherein the multi-layer estimation comprises an outlier detection for eliminating fingerprint data with erroneous horizontal location data.
Embodiment 13:
   The method according to any of embodiments 1 to 12, the method further comprising:
   - estimating a position of a mobile device (2) based on radio measurements observed at the mobile device (2) and the altitude map (60a, 60b, 60c).
Embodiment 14:
   The method according to any of embodiments 1 to 13, the method further comprising:
   - associating radio environment data with one or more layers determined with the multi-layer estimation for one or more tiles (62) of the altitude map (60a, 60b, 60c).
Embodiment 15:
   An apparatus (2, 3) comprising means (20 - 26, 30 - 34) for performing a method according to any of embodiments 1 to 14.
Embodiment 16:
   A computer program code, the computer program code, when executed by a processor (20, 30), causing an apparatus (2, 3) to perform the method of any of the embodiments 1 to 14.
Embodiment 17:
   A non-transitory computer readable storage medium (70 - 76) in which computer program code is stored, the computer program code when executed by a processor causing at least one apparatus to perform the method of any of embodiments 1 to 14.

Any presented connection in the described embodiments is to be understood in a way that the involved components are operationally coupled. Thus, the connections can be direct or indirect with any number or combination of intervening elements, and there may be merely a functional relationship between the components.

Further, as used in this text, the term 'circuitry' refers to any of the following:
(a) hardware-only circuit implementations (such as implementations in only analog and/or digital circuitry)
(b) combinations of circuits and software (and/or firmware), such as: (i) to a combination of processor(s) or (ii) to portions of processor(s)/ software (including digital signal processor(s)), software, and memory(ies) that work together to cause an apparatus, such as a mobile phone, to perform various functions) and
(c) to circuits, such as a microprocessor(s) or a portion of a microprocessor(s), that re-quire software or firmware for operation, even if the software or firmware is not physically present.

This definition of 'circuitry' applies to all uses of this term in this text, including in any claims. As a further example, as used in this text, the term 'circuitry' also covers an implementation of merely a processor (or multiple processors) or portion of a processor and its (or their) accompanying software and/or firmware. The term 'circuitry' also covers, for example, a baseband integrated circuit or applications processor integrated circuit for a mobile phone.

Any of the processors mentioned in this text, in particular but not limited to processors of Fig. 2 and 3, could be a processor of any suitable type. Any processor may comprise but is not limited to one or more microprocessors, one or more processor(s) with accompanying digital signal processor(s), one or more processor(s) without accompanying digital signal processor(s), one or more special-purpose computer chips, one or more field-programmable gate arrays (FPGAS), one or more controllers, one or more application-specific integrated circuits (ASICS), or one or more computer(s). The relevant structure/hardware has been programmed in such a way to carry out the described function.

Moreover, any of the actions described or illustrated herein may be implemented using executable instructions in a general-purpose or special-purpose processor and stored on a computer-readable storage medium (e.g., disk, memory, or the like) to be executed by such a processor. References to 'computer-readable storage medium' should be understood to encompass specialized circuits such as FPGAs, ASICs, signal processing devices, and other devices.

It will be understood that all presented embodiments are only exemplary, and that any feature presented for a particular exemplary embodiment may be used with any aspect of the invention on its own or in combination with any feature presented for the same or another particular exemplary embodiment and/or in combination with any other feature not mentioned. It will further be understood that any feature presented for an example embodiment in a particular category may also be used in a corresponding manner in an example embodiment of any other category.

## Claims

1. Method, performed by at least one apparatus, the method comprising:
- obtaining (41) fingerprint data at least comprising position information collected by a mobile device (2) in a region (50), said position information comprising altitude information;
- obtaining (42) geographical map data at least partially representing the region (50) and comprising geometric information (64, 66) about one or more structures (54, 56) in the region (50); and
- performing (43), based on said fingerprint data, a multi-layer estimation for one or more tiles (62) of an altitude map (60a, 60b, 60c) at least partially representing the region (50), wherein said multi-layer estimation further takes into account the geometric information (64, 66) about one or more structures (54, 56) in the region (50).

2. The method according to claim 1, wherein said multi-layer estimation comprises determining a multi-layer property, a layer count and/or one or more layer altitudes for one or more tiles (62) of the altitude map (60a, 60b, 60c).

3. The method according to claim 1 or 2, wherein the geometric information (64, 66) of the geographical map data about one or more structures (54, 56) in the region (50) comprises one or more of
- location information about one or more structures;
- two-dimensional information about the geometry of one or more structures;
- a horizontal footprint of one or more structures;
- three-dimensional information about the geometry of one or more structures;
- a three-dimension model of one or more structures;
- information about horizontal outer boundaries of one or more structures;
- a height of one or more structures;
- an absolute altitude of a bottom of one or more structures; and/or
- a number of layers of one or more structures.

4. The method according to any of claims 1 to 3, wherein the multi-layer estimation comprises determining, based on the geometric information (64, 66) about one or more structures (54, 56) in the region (50), one or more uniform horizontal areas (65, 67) in the altitude map (60a, 60b, 60c), which can be assumed to represent in each case a part of the region with a uniform layer structure, in particular with a uniform layer count and/or uniform layer altitudes.

5. The method according to claim 4, wherein, based on the geometric information (64, 66) about one or more structures (54, 56) in the region (50), at least one uniform horizontal area (65, 67) is determined such that a boundary thereof does at least in part not extend over a horizontal outer boundary of a corresponding structure.

6. The method according to claim 4 or 5, wherein said determining of one or more uniform horizontal areas (65, 67) in the altitude map (60a, 60b, 60c) comprises splitting one or more tiles (62) of the altitude map (60a, 60b, 60c), such that each tile (62) represents a part of the region (50) only comprising a single structure (54, 56) in the region (50).

7. The method according to any of claims 4 to 6, wherein, based on the geometric information (64, 66) about structures (54, 56) in the region (50), at least one uniform horizontal area (65, 67) is determined such that it matches with an area in the altitude map (60a, 60b, 60c) representing a part of the region (50) known to have a uniform layer structure.

8. The method according to any of claims 1 to 7, wherein said multi-layer estimation comprises, based on the geometric information (64, 66) about structures (54, 56) in the region (50), determining tiles (62) of the altitude map (60a, 60b, 60c) representing a part of the region (50) not comprising a structure to be single-layer areas.

9. The method according to any of claims 1 to 8, wherein the multi-layer estimation, based on the geometric information (64, 66) about structures (54, 56) in the region (50), is restricted such that an estimated layer count or a sum of layer heights for a tile (62) is in accordance with a height of a structure (54, 56) in a part of the region (50) represented by the respective tile (62).

10. The method according to any of claims 1 to 9, wherein the multi-layer estimation, based on the geometric information (64, 66) about structures (54, 56) in the region (50), is restricted such that one or more determined layer altitudes for a tile (62) have to be in accordance with an altitude and optionally a height of a structure (54, 56) in a part of the region (50) represented by the respective tile (62).

11. The method according to any of claims 1 to 10, wherein the multi-layer estimation, based on the geometric information (64, 66) about structures (54, 56) in the region (50), is restricted such that an estimated layer count for a tile (62) has to be in accordance with a layer count of a structure (54, 56) in a part of the region (50) represented by the respective tile (62).

12. The method according to any of claims 1 to 11, wherein the multi-layer estimation comprises an outlier detection for eliminating fingerprint data with erroneous horizontal location data.

13. The method according to any of claims 1 to 12, the method further comprising:
- estimating a position of a mobile device (2) based on radio measurements observed at the mobile device (2) and the altitude map (60a, 60b, 60c).

14. The method according to any of claims 1 to 13, the method further comprising:
- associating radio environment data with one or more layers determined with the multi-layer estimation for one or more tiles (62) of the altitude map (60a, 60b, 60c).

15. An apparatus (2, 3) comprising means (20 - 26, 30 - 34) for performing a method according to any of claims 1 to 14.

16. A computer program code, the computer program code, when executed by a processor (20, 30), causing an apparatus (2, 3) to perform the method of any of the claims 1 to 14.

17. A non-transitory computer readable storage medium (70 - 76) in which computer program code is stored, the computer program code when executed by a processor causing at least one apparatus to perform the method of any of claims 1 to 14.
